(19) Europäisches Patentamt
European Patent Office
Office européen des brevets

(11) **EP 1 865 531 A2**

(12) **EUROPEAN PATENT APPLICATION**

(43) Date of publication:
**12.12.2007 Bulletin 2007/50**

(51) Int Cl.:
**H01J 17/49** (2006.01)

(21) Application number: **06125406.6**

(22) Date of filing: **05.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.06.2006 KR 20060051010**

(71) Applicant: **SAMSUNG ELECTRONICS CO., LTD.**
**Suwon-si,**
**Gyeonggi-do (KR)**

(72) Inventors:
 • **Yoon, Seok-il**
  **Daejeon (KR)**

 • **Nho, Jeong-ho**
  **Yeongtong-gu,Suwon-si, Gyeonggi-do (KR)**
 • **Lim, Sung-hwan**
  **Yeongtong-gu , Suwon-si,**
  **Gyeonggi-do (KR)**
 • **Jeon, Wook-jae**
  **Gyeonggi-do (KR)**
 • **Lee, Dae-hee**
  **Seoul (KR)**

(74) Representative: **Robinson, Ian Michael**
 **Appleyard Lees**
 **15 Clare Road**
 **Halifax, West Yorkshire HX1 2HY (GB)**

(54) **Display Panel**

(57)     A display panel is disclosed. The display panel includes an upper substrate (120) through which light used for an image display passes and a plurality of light guides (126a) collecting and emitting the light transmitted through the upper substrate (120). The display panel may further include anti-reflective part, EMI shielding part (127), infrared filtering part or glass substrate (128) to increase the bright room contrast or to improve the image displayed by the display panel.

FIG. 2

EP 1 865 531 A2

**Description**

The present invention relates to a display panel, and more particularly, to a plasma display panel having an improved structure displaying an image.

In general, a plasma display panel (PDP) is a device that displays an image using electric discharge. Such a plasma display panel has become very popular since the plasma display panel has a superior display performance in luminance and viewing angle.

The plasma display panel is classified into a facing discharge type and a surface discharge type depending on the arrangement of electrodes. In the facing discharge plasma display panel, a pair of sustaining electrodes is provided on upper and lower substrates, and discharge is generated in a vertical direction of the panel. On the other hand, in the surface discharge plasma display panel, a pair of sustaining electrodes is provided on the same substrate, and an electric discharge occurs on the surface of the substrate.

Although it has a high luminous efficiency, the facing discharge plasma display panel has the disadvantage that phosphors easily deteriorate due to the electrical discharge. Recently, the surface discharge plasma display panel has been mainly used.

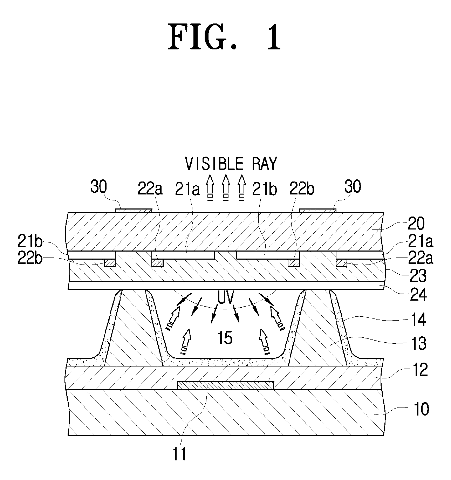

Figure 1 is a view illustrating the construction of a general plasma display panel. The plasma display panel shown in Figure 1 is a surface discharge plasma display panel. In order to easily illustrate the internal construction of the plasma display panel, a part of the plasma display panel is cut, and only an upper substrate 20 is rotated at right angle with respect to a lower substrate 10.

A plurality of address electrodes 11 are arranged in stripes on the upper surface of the lower substrate 10. The address electrodes 11 are embedded in a first dielectric layer 12 made of white dielectric material. A plurality of partitions 13 are provided at a predetermined interval on the upper surface of the first dielectric layer 12 in order to prevent electrical or optical crosstalk among discharge cells 15. A fluorescent layer 14 is coated on the inner surface of the respective discharge cells 15 defined by the partitions 13, and the discharge cells 15 are filled with a discharged gas which is generally a mixture of Ne and Xe, to generate the plasma discharge.

The upper substrate 20 is a transparent substrate, mainly made of glass, allowing visible rays of light to pass. The upper substrate 20 is sealingly assembled to the lower substrate 10 with the partitions 13 formed thereon. On the lower surface of the upper substrate 20, pairs of sustaining electrodes 21a and 21b are provided in stripes in a direction perpendicular to the address electrodes 11. The sustaining electrodes 21a and 21b are made of transparent conductive material such as indium tin oxide (ITO). Bus electrodes 22a and 22b made of metal are provided on the lower surfaces of the sustaining electrodes 21a and 21b, so as to reduce line resistance thereof, and have a width narrower than that of the sustaining electrodes 21a and 21b. The sustaining electrodes 21a and 21b and the bus electrodes 22a and 22b are embedded in a second transparent dielectric layer 23. A protective layer 24 is formed on the lower surface of the second dielectric layer 23, and serves to prevent the second dielectric layer 23 from damaged due to sputtering of plasma particles and also to reduce discharge voltage and sustaining voltage by emitting secondary electrons. The protective layer 24 is generally made of magnesium oxide (MgO).

A plurality of black stripes 30 are formed on the upper surface of the upper substrate 20 to prevent light from entering the interior of the plasma display panel from the outside of the panel. The black stripes 30 are formed parallel with the sustaining electrodes 21a and 21b at regular intervals.

With the above arrangement of the plasma display panel, the address discharge is generated between any one of the sustaining electrodes 21a and 21b and the address electrode 11. During this address discharge, wall charges are generated. Then, the sustaining discharge is generated due to the potential difference between the pair of sustaining electrodes 21a and 21b, and thus UV rays are generated from the discharged gas. The fluorescent layer 14 is excited by the UV rays to emit visible rays of light. The visible rays of light passing through the upper substrate 20 form an image which can be seen by the human eyes.

In the conventional plasma display panel, the external light enters the interior of the discharge cell 15 or is reflected from the upper substrate 20 under the condition in that the exterior is bright, that is, a bright room condition, so that bright room contrast deteriorates. Further, since the visible rays of light generated from the discharge cell 15 are diffused rays of light having no particular direction, its transmittance deteriorates, and thus the screen display ability of the plasma display panel is depreciated.

Embodiments of the present invention have been developed in order to address the above and other problems associated with the conventional arrangement.

According to the present invention there is provided an apparatus and method as set forth in the appended claims. Preferred features of the invention will be apparent from the dependent claims, and the description which follows.

An aspect of the present invention provides a plasma display panel which collects and emits visible rays of light generated from a discharge cell and minimizes an influence of external light to improve bright room contrast, so that a user can see a fine quality of an image.

Another aspect of the present invention provides a plasma display panel with a filter capable of maintaining a high-efficiency transmission characteristic with respect to the diffused light generated from the plasma display panel and maximizing a reflective function to external light to improve bright room contrast.

The foregoing and other objects and advantages are substantially realized by providing a display panel, according to the present invention, which includes an upper substrate through which light used for an image display passes, and a plurality of light guides formed on the upper substrate to collect and emit the light transmitted through the upper substrate.

The plurality of light guides may have a light incident surface to which the light is incident, and a light emitting surface from which the light is emitted, and the light incident surface may be larger than the light emitting surface.

The display panel may further include a plurality of external light filtering members formed among the plurality of light guides to filter the external light.

The plurality of e external light filtering members may be made of a mixture of carbon black and a medium having a low index of reflection.

The display panel may further include an EMI shielding part formed on an upper surface of the upper substrate to shield an electromagnetic interference (EMI).

The EMI shielding part may be formed in a mesh shape or as a conductive film.

The display panel may further include an anti-reflection part formed on an upper surface of the upper substrate to prevent reflection of the external light.

The anti-reflection part may be made of an anti-reflective film.

The display panel may further include a near-infrared filtering part formed on an upper surface of the upper substrate to filter near infrared rays contained in the light which is transmitted through the upper substrate.

In another aspect of the present invention, there is provided a plasma display panel, which includes an upper substrate through which light generated from a discharge cell passes, and a plurality of light guides collecting and emitting the light transmitted through the upper substrate.

The plasma display panel may further include a plurality of external light filtering members formed among the plurality of light guides to filter external light.

In still another aspect of the present invention, there is provided a filter for filtering an image output of a display device, which includes a plurality of light guides collecting and emitting light outputted from the display device, and a plurality of external light filtering members formed among the plurality of light guides to filter the external light.

The plurality of light guides may have a light incident surface, to which the light is incident, and a light emitting surface from which the light is emitted, and the light incident surface may have an area larger than that of the light emitting surface.

A plurality of the external light filtering members may be made of a mixture of carbon black and a medium having a low index of reflection.

The filter may further include an EMI shielding part shielding an electromagnetic interference (EMI) for the image output of the display device.

The EMI shielding part may be formed in a mesh shape or as a conductive film.

The filter may further include an anti-reflection part preventing reflection of the external light.

The anti-reflection part may be made of an anti-reflective film.

The filter may further include a near-infrared filtering part filtering near infrared rays contained in the light which is outputted from the display device.

The filter may further include a glass substrate reinforcing rigidity of the filter.

In still another aspect of the present invention, there is provided a film attached to a display panel, which includes a plurality of light guides collecting and emitting light outputted from the display panel, a plurality of external light filtering members formed among the plurality of light guides to filter external light, an EMI shielding part shielding an electromagnetic interference (EMI) for an image output of the display panel, and an anti-reflection part preventing reflection of the external light entering the display panel.

The above aspects and features of the present invention will be more apparent by describing certain embodiments of the present invention with reference to the accompanying drawings, in which:

Figure 1 is a view illustrating the construction of a general plasma display panel;

Figure 2 is a view illustrating the construction of a plasma display panel according to an embodiment of the present invention;

Figures 3A, 3B and 3C are views explaining optical characteristics of an optical film provided in a plasma display panel according to an embodiment of the present invention; and

Figure 4 is a view illustrating a filter for use in a plasma display panel according to another embodiment of the present invention.

Throughout the drawings, like reference numerals will be understood to refer to like parts, components and structures.

Certain embodiments of the present invention will now be described in greater detail with reference to the accompanying drawings.

In the following description, same drawing reference numerals are used for the same elements even in different drawings. The matters defined in the description such as a detailed construction and elements are provided to assist in a comprehensive understanding of the invention. Thus, it is apparent that the present invention can be carried out without those defined matters. Also, well-known functions or constructions are not described in detail since they would obscure the understanding of the invention.

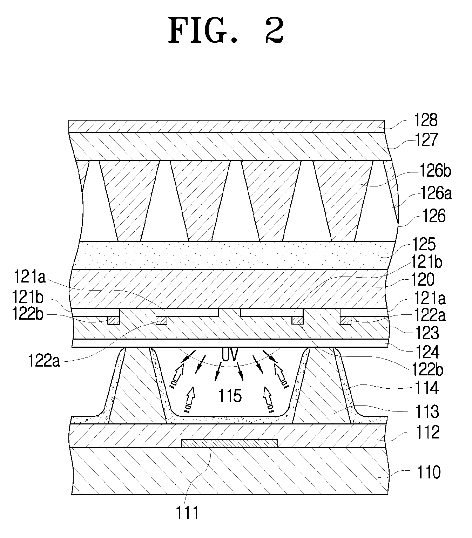

Figure 2 is a view depicting the construction of a plasma display panel according to an embodiment of the present invention.

Referring to Figure 2, the plasma display panel according to an embodiment of the present invention includes an upper substrate 120 and a lower substrate 110 which are spaced apart from each other. A plurality of discharge cells 115 are formed between the upper substrate 120 and the lower substrate 110, and a plasma discharge is generated in the discharge cells 115.

The lower substrate 110 is a glass substrate, and a plurality of address electrodes 111 generating an address discharge are arranged in stripes on the upper surface of the lower substrate 110. A first dielectric layer 112 is formed on the upper surface of the lower substrate 110 to cover the address electrodes 111. The first dielectric layer 112 may be formed by applying a white dielectric material onto the upper surface of the lower substrate 110.

A plurality of partitions 113 are provided at a predetermined interval on the upper surface of the first dielectric layer 112. The partitions 113 are arranged in parallel with the address electrodes 111. The partitions 113 define the space between the lower substrate 110 and the upper substrate 120 to form the discharge cells 115 and simultaneously prevent electrical or optical crosstalk among adjacent discharge cells 115. Consequently, the partitions 113 serve to improve color purity. Red (R), green (G), and blue (B) fluorescent layers 114 having a predetermined thickness are coated on the upper surface of the first dielectric layer 112 and the sidewalls of the partitions 113 which form the inner surfaces of the respective discharge cells 115.

The discharge cells 115 are filled with a discharged gas which is generally a mixture of Ne and Xe, to generate the plasma discharge. The fluorescent layers 114 are excited by the UV rays generated due to the plasma discharge of the discharged gas, and thus emit visible rays of light having a color corresponding to the respective fluorescent layers 114.

On the lower surface of the upper substrate 120, discharge electrodes 121a and 121b are provided in stripes in a direction perpendicular to the address electrodes 111. As shown in Figure 1, the discharge electrodes 121a and 121b make a pair, and are made of transparent conductive material such as indium tin oxide (ITO), allowing visible rays of light to pass through the discharge electrodes.

Bus electrodes 122a and 122b made of metal are provided on the lower surfaces of the discharge electrodes 121a and 121b, and the bus electrodes 122a and 122b make a pair, like the discharge electrodes 121a and 121b. The bus electrodes 122a and 122b are electrodes to reduce the line resistance of the discharge electrodes 121a and 121b, and have a width narrower than that of the discharge electrodes 121a and 121b.

A second dielectric layer 123 is formed to cover the discharge electrodes 121a and 121b and the bus electrodes 122a and 122b. The second dielectric layer 123 may be formed by applying a transparent dielectric material onto the lower surface of the upper substrate 120 to have a predetermined thickness. A protective layer 124 is formed on the lower surface of the second dielectric layer 123, and serves to prevent the second dielectric layer 123 and the discharge electrodes 121a and 121b from damaged due to sputtering of plasma particles and also to reduce discharge voltage by emitting secondary electrons. The protective layer 124 is formed by applying magnesium oxide (MgO) onto the lower surface of the second dielectric layer 123 with a predetermined thickness.

With the above arrangement of the plasma display panel, the address discharge is generated between the address electrode 111 and either of the discharge electrodes 121a and 121b. During this address discharge, a wall charge is formed. When AC voltage is applied to the pair of the discharge electrodes 121a and 121b, the sustaining discharge is generated in the discharge cells 115 with the wall discharge formed thereon, and thus UV rays are generated from the discharged gas. The fluorescent layer 114 is excited by the UV rays to emit visible rays of light.

A near-infrared filtering part 125 is formed on the upper surface of the upper substrate 120 to filter or interrupt near infrared rays slightly longer than visible rays of light generated from the discharge cell 115 and improve color purity. Further, an optical part 126 is formed on the upper surface of the near-infrared filtering part 125, and has a plurality of light guides 126a collecting and emitting the visible rays of light, from which the near infrared rays are filtered, and an external light filtering member 126b preventing external light from entering the discharge cells 115.

Each light guide 126a includes a light incident surface, on which visible rays of light generated from the discharge cells 115 are incident, and a light emitting surface. The light incident surface has an area larger than that of the light emitting surface. The visible rays of light are radiated into the light guide 126a through the light incident surface, and are emitted from the light emitting surface. Since the light guide 126a can be formed with a width of up to several tens of μm, it is used to form a high precise image, thereby improving the luminance of the panel. The external light filtering member 126b is made of a mixture of carbon black and a medium having a low index of reflection. Accordingly, the external light filtering member 126b absorbs light entering from the exterior to prevent contrast from being reduced due to the external light.

On the upper surface of the optical part 126, an EMI shielding part 127 shielding an electromagnetic interference (EMI) is formed in a mesh shape or as a conductive film. Further, an anti-reflection part 128 preventing reflection of external light is formed on the upper surface of the EMI shielding part 127. An anti-reflective film may be used as the anti-reflection part 128.

As described above, by the elements 125, 126, 127, and 128 formed on the upper surface of the upper substrate 120, the visible rays of light generated from the discharge cells 115 are filtered, collected, and emitted, and also the influence of external light is minimized, whereby improving the bright room contrast.

As such, the elements 125, 126, 127, and 128 formed on the upper surface of the upper substrate 120 may be formed as a film so that it can be adhered on the upper substrate 120.

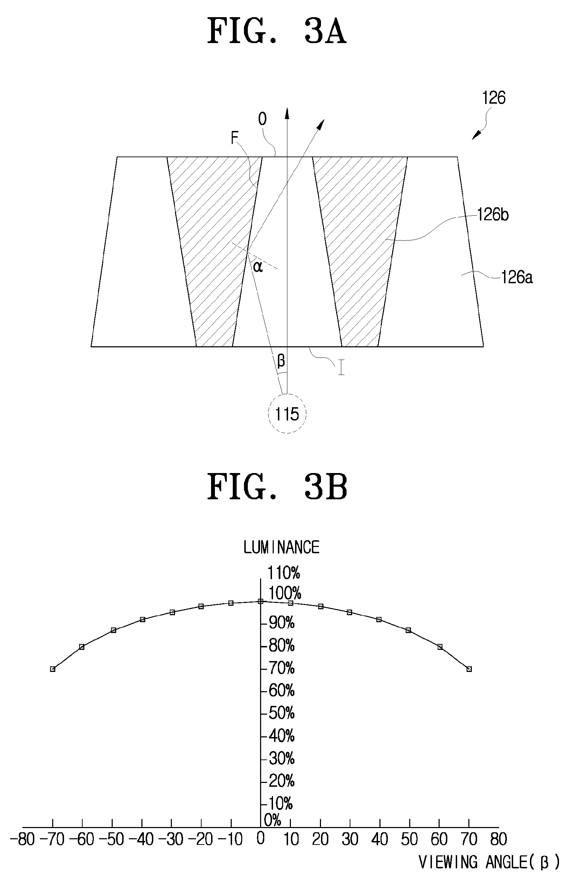

Figures 3A through 3C are views explaining optical characteristics of the optical film provided in the plasma display panel according to the embodiment of the present invention.

In general, when light is incident at a certain angle from a medium having a high index of reflection to a medium having a low index of reflection, total internal reflection (TIR) takes place at the boundary between two mediums when the angle of incidence is greater than a specified threshold angle. The light guide 126a collects and emits the visible rays of light generated from the discharge cells 115 with use of the feature in that the total amount of the incident light is reflected at the boundary, as described above.

Referring to Figure 3A, when visible rays of light enter the boundary F of the light guide 126a at a desired incident angle α, total internal reflection takes place in the light guide 126a, if the incident angle α is larger than a threshold angle θ. In this instance, the threshold angle can be calculated by Equation (1).

$$\theta = arc\sin(Na / Nf) \qquad ...... \quad (1)$$

In Equation (1), Na denotes an index of reflection of the external light filtering member 126b, and Nf denotes an index of reflection of the light guide 126a.

Figure 3B is a profile depicting a luminance distribution depending on a viewing angle β of the visible rays of light emitted from the discharge cells 115. The visible rays of light generated from the discharge cells 115 of the plasma display panel are diffused light emitted in all directions, and thus the luminance distribution of the diffused light is varied as a function of the viewing angle β.

Table 1 shows the relationship between the luminance and the incident angle α depending on the viewing angle β depicted in Figure 3B.

[Table 1]

| Viewing Angle (°) | Luminance (%) | Incident Angle (°) |
|---|---|---|
| -70 | 72.7 | 16.73 |
| -60 | 84.0 | 26.73 |
| -50 | 90.4 | 36.73 |
| -40 | 94.4 | 46.73 |
| -30 | 96.7 | 56.73 |
| -20 | 98.5 | 66.73 |
| -10 | 100 | 76.73 |
| 0 | 100 | 86.73 |
| 10 | 100 | 76.73 |
| 20 | 98.5 | 66.73 |
| 30 | 96.7 | 56.73 |
| 40 | 94.4 | 46.73 |

(continued)

| Viewing Angle (°) | Luminance (%) | Incident Angle (°) |
|---|---|---|
| 50 | 90.4 | 36.73 |
| 60 | 84.0 | 26.73 |
| 70 | 72.7 | 16.73 |

As shown in Table 1, the luminance of the diffused light and the incident angle a entering the boundary F are varied depending on the viewing angle β. That is, as the viewing angle β is increased, the luminance of the diffused light is decreased, and the incident angle α is also reduced.

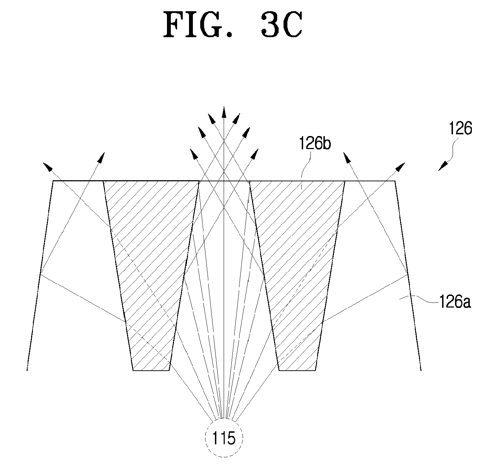

Figure 3C is a view illustrating the efficiency of the total internal reflection of the light guide provided in the plasma display panel according the embodiment of the present invention.

Supposing that the index of reflection of the external light filtering member 126b is 1.4, the threshold angle θ of the visible rays of light generated from the discharge cells 115 is calculated at about 63.8° through Equation 1. Therefore, the light having the incident angle α of above 63.8° is wholly reflected from the light guide 126a, and is emitted toward the emitting surface O. That is, referring to Table 1, the diffused light having a viewing angle of about -23° to +23° satisfies the condition of total reflection.

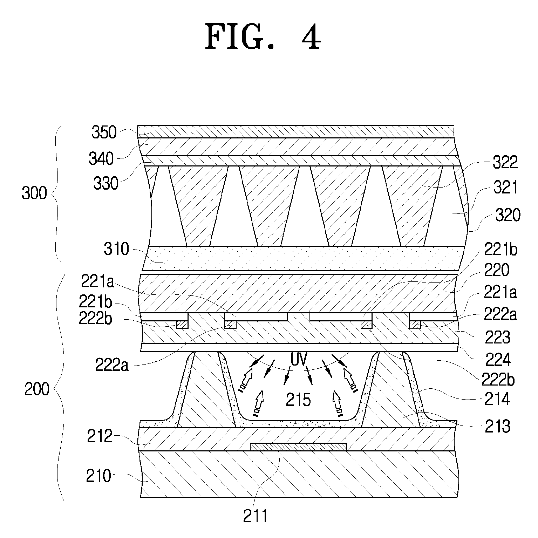

Figure 4 is a view illustrating a filter 300 used in a plasma display panel 200 according to another embodiment of the present invention.

The general construction of the plasma display panel 200 shown in Figure 4 is identical to that of a conventional plasma display panel. That is, the plasma display panel 200 includes address electrodes 211, a first dielectric layer 212, partitions 213, and a fluorescent layer 214, which are formed on the upper surface of a lower substrate 210. Also, on the lower surface of an upper substrate 220, discharge electrodes 221a and 221b, bus electrodes 222a and 222b, a second dielectric layer 223, and a protective layer 224 are formed. The lower substrate 210 and the upper substrate 220 are spaced apart from each other, so as to form a plurality of discharge cells 215 generating plasma discharge. The discharge cells 215 are filled with a discharged gas which is generally a mixture of Ne and Xe, to generate the plasma discharge.

The filter 300 provided on the upper surface of the plasma display panel 200 includes a near-infrared filtering part 310, an optical part 320, an EMI shielding part 330, a glass substrate 340, and an anti-reflection part 350.

The near-infrared filtering part 310 is to filter or interrupt near infrared rays slightly longer than visible rays of light generated from the discharge cell 215 and improve the color purity.

The optical part 320 includes a light guide 321 and an external light filtering member 322. The light guide 321 is to collect and emit the visible rays of light generated from the discharge cells 215. The light incident surface of the light guide 321 has an area larger than that of the light emitting surface. Since the light guide 321 can be formed with a width of up to several tens of $\mu$m, it is used to form a high precise image, thereby improving the luminance of the panel. The external light filtering member 322 is made of a mixture of carbon black and a medium having a low index of reflection.

The EMI shielding part 330 is to shield an electromagnetic interference (EMI), and is formed in a mesh shape or as a conductive film. The filter 300 has a glass substrate 340 to reinforce its rigidity. The glass substrate 340 used in the filter is a tempered glass, and minimizes the generation of corrugation on the filter 300. The anti-reflection part 350 is to prevent reflection of the external light, and an anti-reflective film may be used as the anti-reflection part 350.

By providing the plasma display panel 200 with the film 300, the visible rays of light generated from the discharge cells 215 are filtered, collected, and emitted, and also the influence of external light is minimized, thereby improving the bright room contrast.

As described above, according to the present invention, by reforming the construction of the upper substrate of the plasma display panel or providing the plasma display panel with the improved filter, the bright room contrast can be improved or a fine quality of an image can be provided to a user.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display panel comprising:

   an upper substrate (120) through which light used for an image display passes;
   a plurality of light guides (126a) to collect and emit the light transmitted through the upper substrate (120); and
   an anti-reflection part (128) to prevent reflection of an external light.

2. The display panel of claim 1, wherein the plurality of light guides (126a) have a light incident surface to which the light is incident and a light emitting surface from which the light is emitted, wherein the light incident surface is larger than the light emitting surface.

3. The display panel of claim 1 or 2, further comprising a plurality of external light filtering members (126b) formed among the plurality of light guides (126a) to filter an external light.

4. The display panel of claim 3, wherein the plurality of external light filtering members (126b) are made of a mixture of carbon black and a medium having a low index of reflection.

5. The display panel of any preceding claim, wherein the anti-reflection part (128) is formed on the upper surface of the upper substrate (120).

6. The display panel of claim 6, wherein the anti-reflection part (128) is an anti-reflective film.

7. The display panel of any preceding claim, further comprising an EMI shielding part (127) to shield an electromagnetic interference (EMI).

8. The display panel of claim 7, wherein the EMI shielding part (127) is formed on an upper surface of the upper substrate (120).

9. The display panel of claim 8, wherein the EMI shielding part (127) is formed in a mesh shape or as a conductive film.

10. The display panel of any preceding claim, further comprising a near-infrared filtering part (125) to filter near infrared rays contained in the light which is transmitted through the upper substrate (120).

11. The display panel of claim 10, wherein the near-infrared filtering part (125) is formed on an upper surface of the upper substrate (120).

12. The display panel of any preceding claim, wherein the panel is a plasma display panel.

13. The display panel of any preceding claim, further comprising a glass substrate (128).

14. The display panel of claim 13 wherein the glass substrate (128) is a tempered glass.

15. The display panel of claim 13 or 14, wherein the glass substrate (128) prevents corrugation of the display panel.

16. A filter (300) for filtering an image output of a display device (200), comprising:

   a plurality of light guides (321) collecting and emitting light outputted from the display device (200); and
   a plurality of external light filtering members (322) formed among the plurality of light guides (321) to filter (300) an external light.

**17.** The filter (300) of claim 16, wherein the plurality of light guides (321) have a light incident surface to which the light is incident and a light emitting surface from which the light is emitted, wherein the light incident surface is larger than the light emitting surface.

**18.** The filter (300) of claim 16 or 17, wherein the plurality of external light filtering members (322) are made of a mixture of carbon black and a medium having a low index of reflection.

**19.** The filter (300) of claim 18, further comprising an EMI shielding part (330) shielding an electromagnetic interference (EMI) to the image output of the display device (200).

**20.** The filter (300) of claim 19, wherein the EMI shielding part (330) is formed in a mesh shape or as a conductive film.

**21.** The filter (300) of any of claims 16 to 20, further comprising an anti-reflection part (350) preventing reflection of the external light.

**22.** The filter (300) of claim 21, wherein the anti-reflection part (350) is made of an anti-reflective film.

**23.** The filter (300) of any of claims 16 to 22, further comprising a near-infrared filtering part (310) filtering near infrared rays contained in the light which is outputted from the display device (200).

**24.** The filter (300) of any of claims 16 to 23, further comprising a glass substrate (340) reinforcing rigidity of the filter (300).

**25.** A film for attachment to a display panel, comprising:

a plurality of light guides (321) collecting and emitting light outputted from the display panel;
a plurality of external light filtering members (322) formed among the plurality of light guides (321) to filter an external light;
an EMI shielding part (330) shielding an electromagnetic interference (EMI) for an image output of the display panel; and
an anti-reflection part (350) preventing reflection of the external light entering the display panel.

**26.** The film of claim 25, wherein the film is attached to a plasma display panel.

**27.** The film of claim 25 or 26, further comprising a glass substrate (350).

**28.** The film of claim 27 wherein the glass substrate (350) is a tempered glass.

**29.** The film of claim 27 or 28, wherein the glass substrate (350) prevents corrugation of a display panel.

# FIG. 1

VISIBLE RAY

# FIG. 2

# FIG. 3A

# FIG. 3B

# FIG. 3C

# FIG. 4